## Europäisches Patentamt
## European Patent Office
## Office européen des brevets

(19)

(11) Veröffentlichungsnummer: **0 088 247**
**B1**

(12)

# EUROPÄISCHE PATENTSCHRIFT

(45) Veröffentlichungstag der Patentschrift:
23.10.85

(21) Anmeldenummer: 83101212.5

(22) Anmeldetag: 09.02.83

(51) Int. Cl.⁴: **F 42 B 3/00, B 64 C 27/00**

(54) Mit pyrotechnischen Ladungen arbeitende Vorrichtung zum Lösen von unter Last stehenden Verbindungen.

(30) Priorität: 09.03.82 DE 3208401

(43) Veröffentlichungstag der Anmeldung:
14.09.83 Patentblatt 83/37

(45) Bekanntmachung des Hinweises auf die Patenterteilung:
23.10.85 Patentblatt 85/43

(84) Benannte Vertragsstaaten:
DE FR GB IT

(56) Entgegenhaltungen:
FR - A - 2 512 098
US - A - 3 084 597
US - A - 3 482 484
US - A - 3 888 158
US - A - 4 028 990

(73) Patentinhaber: **Deutsche Forschungs- und Versuchsanstalt für Luft- und Raumfahrt e.V., Linder Höhe, D-5000 Köln 90 (DE)**

(72) Erfinder: **Oliva, Rudolf, Danzigstrasse 12, D-3302 Cremlingen (DE)**
Erfinder: **Schmidt, Ulf, Dipl.-Ing., Th.-Francke-Weg 32, D-3300 Braunschweig (DE)**

(74) Vertreter: **Gralfs, Harro, Dipl.-Ing., Am Bürgerpark 8, D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf eine mit pyrotechnischen Ladungen arbeitende Vorrichtung zum Lösen von unter Last stehenden Verbindungen einer Mehrzahl von Bauteilen mit wenigstens zwei durch Querkräfte beanspruchten Bolzen.

Mit pyrotechnischen Ladungen arbeitende Vorrichtungen zum Lösen von unter Last stehenden Verbindungen sind aus der US-A-3 888 158 bekannt. Dabei wird eine lasttragende Hülse in ihre Mitte auseinander gesprengt.

Bekannt sind weiter mit pyrotechnischen Ladungen arbeitende Trennvorrichtungen für Verbindungskabel.

Bei einem aus der US-A-3 084 597 bekannten Kabelverbinder sind zwei in Längsrichtung des Kabels ineinander-steckbare Bauteile vorgesehen, die durch einen Querbolzen verbunden sind. Eine Stirnseite des Querbolzen steht dabei mit einer Kammer in Verbindung in der durch eine pyrotechnische Ladung ein Gasdruck aufbaubar ist, über den der Querbolzen austreibbar und damit die Verbindung lösbar ist.

Bei einem weiteren aus der US-A-4 028 990 bekannten Kabelverbinder sind die zusammensteckbaren Bauteile auf einer Außenseite mit rechteckigen Keilnuten versehen, die bei den zusammengesteckten Bauteilen miteinander fluchten und in die als Arretierung ein Keilelement einsetzbar ist, das am Fuß eines Bauteiles ausgebildet ist, in dem eine Zylinderkammer mit quer zur Lastrichtung des Kabelverbinders liegender Achse ausgebildet ist. In der Zylinderkammer liegt ein Kolben, der mit einem der beiden Bauteile über einen Schraubansatz am freien Ende der Kolbenstange fest verbunden ist. Zwischen Kolben und Zylinderboden ist die pyrotechnische Ladung untergebracht. Der Keilansatz des Gehäuse wird über einen auf der Kolbenstange ausgebildeten Scherring in Eingriff mit den Keilnuten gehalten.

Beim Betrieb von Geräten und Anlagen, beispielsweise in der Luft- und Raumfahrt, in der Schiffahrt, insbesondere auf U-Booten und in Kernkraftwerken sowie sonstigen nuklearen Anlagen, kann es zu Notsituationen kommen, bei denen Verbindungen, die durch Querkräfte beanspruchte Bolzen aufweisen, in einer Zeit in der Größenordnung von Millisekunden fernbetätigt gelöst werden müssen.

Ein Beispiel ist das Abtrennen der Rotorblätter eines Hubschraubers, das notwendig ist, um bei Flugunfähigkeit des Hubschraubers die Besatzung durch Rettungssysteme ungefährdet nach oben aus dem Hubschrauber herauskatapultieren zu können.

Zum Absprengen der Rotorblätter ist ein Verfahren bekannt, bei dem pyrotechnische Ladungen, die nach dem Hohlladungsprinzip arbeiten, an den Rotorblättern oder den Rotorblattbeschlägen angebracht werden. Durch Zünden der Ladungen werden die Rotorblätter oder die Rotorbeschläge durchtrennt und auf diese Weise die Rotorblätter gelöst. Hierbei kommt es durch die Detonation zu einer erheblichen Partikelstreuung, die zu einer Gefährdung sowohl der Besatzung als auch des Rettungssytems führen kann. In gleicher Weise könnten über derartige pyrotechnische Schneidladungen belastete Halterungen durchtrennt werden, beispielsweise Halteglieder, mit denen Schieber oder schieberähnliche Verschlußglieder unter Vorspannung in der Schließ- oder Öffnungsstellung gehalten werden, die durch Lösen der Halteverbindung durch die Vorspannkraft dann in die Schließ- oder Öffnungslage bewegt werden. Das ist jedoch nur unter Inkaufnahme der obigen Nachteile (Detonationswelle, Partikelstreuung, Zerstörung der Bauteile) möglich.

Aufgabe der Erfindung ist es, eine Vorrichtung der gattungsgemäßen Art zu schaffen, bei der es möglich ist, die Bauteile zerstörungsfrei, insbesondere ohne Ausbildung von impulsbeladenen Splittern oder Partikeln detonationsfrei zu lösen.

Diese Aufgabe wird gemäß der Erfindung dadurch gelöst, daß die Bolzen der Verbindung mit einem brückenartigen Gehäuse verbunden sind, das mit einer Zylinderbohrung versehen ist, deren Achse im wesentlichen in der Resultierenden der zum Lösen der Verbindung durch Herausziehen der Bolzen erforderlichen Kraft oder Kräfte liegt, daß ein sich auf einem der Bauteile abstützender Kolben vorgesehen ist, der in die Zylinderbohrung des Gehäuses eingepaßt ist, und daß eine Zündvorrichtung für die zwischen Kolben und Zylinderboden angeordnete pyrotechnische Ladung vorgesehen ist.

Zweckmäßige weitere Ausgestaltungen sind Gegenstand der Unteransprüche.

Die Erfindung ist in der Zeichnung in einem Ausführungsbeispiel veranschaulicht und im nachstehenden im einzelnen anhand der Zeichnung beschrieben.

Fig. 1 zeigt in Seitenansicht eine Verbindung zwischen einem Rotorarm und einem Rotorblatt eines Hubschraubers, ausgerüstet mit einer Trennvorrichtung gemäß der Erfindung.

Fig. 2 zeigt die Vorderansicht im Halbschnitt längs der Linie II-II in Fig. 1.

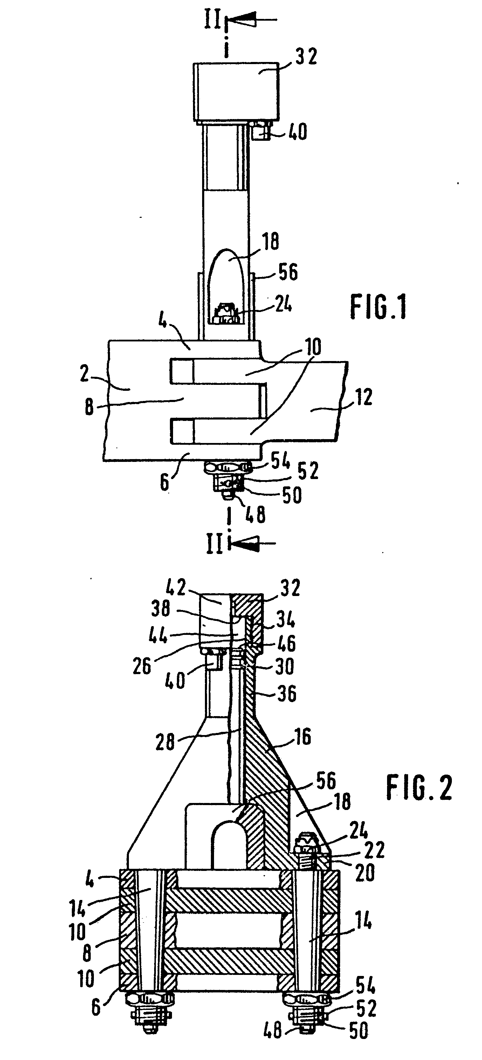

In Fig. 1 ist das Anschlußende eines Rotorarms 2 eines Hubschrauberrotorkopfes dargestellt, der an seinem Ende mit im Abstand voneinander liegenden Stegen 4, 6 und 8 versehen ist, zwischen die die beiden Stege 10 des Rotorblattbeschlages 12 eingreifen. Die Verbindung zwischen dem Rotorarm und dem Rotorblatt wird über zwei im Abstand voneinander liegende konische Bolzen 14 hergestellt, die in entsprechende miteinander fluchtende Bohrungen in den Stegen eingesteckt sind. Die Verbindungsbolzen 14 werden durch die in Fig. 1 dargestellten Kräfte, die als Querkräfte auf die Bolzen wirken, beansprucht. Die Länge der Bolzen beträgt für eine bekannte Hubschrauberkonfiguration 100 mm, die Querkräfte betragen etwa 100 KN.

Auf dem oberen Steg 4 des Rotorarmes 2 ist ein Gehäuse 16 angeordnet. Dieses Gehäuse ist mit Ausschnitten 18 versehen, durch die Flansche 20 gebildet werden, in denen Bohrungen angeordnet sind, durch die ein Gewindesatz 22 der Bolzen 14 hindurchgeführt ist. Über diesen Gewindeansatz wird der Bolzen 14 mittels einer Mutter 24 fest mit dem Gehäuse 16 verbunden. Der gegenüberliegende Bolzen ist in gleicher Weise befestigt.

Mittig zwischen den Achsen der Bolzen 14 ist in dem Gehäuse eine Zylinderbohrung 26 ausgebildet, in die ein Kolben 28 eingreift, der als einfache zylindrische Stange ausgebildet ist, die sich mit ihrem unteren Ende auf der Außenseite des Stegs 4 abstützen kann. Am oberen Ende ist der Kolben über Dichtringe 30, die beispielsweise als O-Ringe ausgebildet sein können, gegen die Wandung der Zylinderbohrung 26 abgedichtet. Der Zylinderraum 44 ist am oberen Ende mit einer Schraubkappe 32 verschlossen, die auf ein Außengewinde 34 eines rohrförmigen Ansatzes 36 des Gehäuses 16 aufgeschraubt ist. Der Boden 38 der Schraubkappe bildet den Zylinderboden. An der Schraubkappe ist eine Zündvorrichtung 40 angeordnet, zweckmäßig in einen Ansatz der Kappe eingeschraubt. Diese Zündvorrichtung 40 steht über einen Zündkanal 42 mit dem Zylinderraum 44 zwischen dem Zylinderboden 38 und dem im Abstand davon liegenden Ende 46 der Kolbenstange 28 in Verbindung, in der die pyrotechnische Ladung untergebracht ist, die über die Zündvorrichtung 40 zündbar ist.

Am unteren Ende der Bolzen 14 sind glatte zylindrische Ansätze 48 vorgesehen, auf die eine Hülse 50 aufgesteckt ist, die über einen Scherstift 52 mit dem zylindrischen Ansatz 48 verbunden ist. Die Hülse 50 ist außen mit einem Gewinde versehen, auf das eine Arretierungsmutter 54 aufgeschraubt ist, mit der der konische Bolzen 14 fixiert wird.

Zum Lösen des Rotorblattes 12 vom Rotorarm 2 wird die Zündvorrichtung betätigt und damit die Ladung im Zylinderraum 44 zur Explosion gebracht. Das sich dabei ausbildende Druckgas stützt sich auf dem Kolben 28 ab und drückt das Gehäuse 16 nach oben. Dadurch werden die beiden Bolzen 14 aus ihren Aufnahmebohrungen in den Stegen herausgezogen, nachdem die Scherstifte 52 an den unteren Enden der Bolzen durchtrennt sind. Wenn die wirksame Länge des Kolbens 28 wenigstens der wirksamen Länge der Bolzen 14 entspricht, werden die Bolzen über ihre gesamte Länge aus den Bohrungen in den Stegen herausgezogen. Das Lösen kann innerhalb von ≈ 3 ms erfolgen.

Das Gehäuse 16 mit den daran befestigten Verbindungsbolzen 14 wird im wesentlichen parallel zur Drehachse des Rotors ausgeschleudert und führt damit nicht zu einer Gefährdung der Besatzung beim Verlassen des Hubschraubers mittels Rettungssystem, dessen Bewegungsrichtung im wesentlichen gleich verläuft. Grundsätzlich können auch Mittel vorgesehen werden, mit denen das Gehäuse am Fortfliegen gehindert wird.

Bei dem dargestellten Ausführungsbeispiel stützt sich der Kolben 28 auf einer Brücke 56 ab, mit der in der Zeichnung nicht dargestellte Bauelemente auf den Rotorarmen überbrückt werden. Das Gehäuse 16 ist hierbei mit einer entsprechenden Aussparung versehen. Der Kolben 28 ist zweckmäßig mit der Brücke 56 fest verbunden. Eine Verbindung des Kolbens 28 mit dem Steg 4, auf dem er sich abstützt, bzw. der Brücke 56 mit diesem Teil ist für das Lösen der Verbindung nicht erforderlich, kann jedoch zweckmäßig sein, um unkontrollierte Bewegungen zu verhindern.

In ähnlicher Weise wie bei der beschriebenen Verbindung der Rotorblätter mit den Rotorarmen eines Hubschraubers kann grundsätzlich eine Arretierungsverbindung für ein unter Vorspannung in einer Stellung gehaltenes Verschlußelement ausgebildet sein, beispielsweise einen Schieber oder dergleichen. Auch in diesem Fall würde die Verbindung durch Bolzen geschaffen, die durch Querkräfte belastet sind und über die beschriebene Bolzenziehvorrichtung lösbar sind. Bei derartigen Anordnungen kann unter Umständen auf eine besondere Bolzensicherung mittels Sicherungsmuttern verzichtet werden. In diesem Fall würde dann auch der Ansatz 48, die Buchse 50, der Scherstift 52 und die Sicherungsmutter 54 entfallen.

In gleicher Weise wie für eine Verbindung mit zwei Bolzen kann die Vorrichtung auch für Verbindungen mit drei oder vier oder auch mehr Bolzen ausgebildet sein. In einem solchen Fall könnte das Gehäuse sternförmig oder aber auch beispielsweise mit einer Flanschplatte ausgebildet sein, an der alle Bolzen befestigt sind. Wesentlich ist, daß auf alle Bolzen im wesentlichen die gleichen Zugkräfte ausgeübt werden, daß sich also die Achse der Zylinderbohrung im wesentlichen in der Resultierenden der zum Lösen der Verbindung erforderlichen Kraft befindet.

**Patentansprüche**

1. Mit pyrotechnischen Ladungen arbeitende Vorrichtung zum Lösen von unter Last stehenden Verbindungen einer Mehrzahl von Bauteilen mit wenigstens zwei durch Querkräfte beanspruchten Bolzen (14), dadurch gekennzeichnet, daß die Bolzen (14) der Verbindung mit einem Gehäuse (16) verbunden sind, das mit einer Zylinderbohrung (26) versehen ist, deren Achse im wesentlichen in der Resultierenden der zum Lösen der Verbindung durch Herausziehen der Bolzen erforderlichen Kraft oder Kräfte liegt, daß ein sich auf einem der Bauteile (2) abstützender Kolben (28) vorgesehen ist, der in die Zylinderbohrung des Gehäuses eingreift, und daß eine Zündvorrichtung (40) für die zwischen Kolben und Zylinderboden angeordnete pyrotechnische Ladung vorgesehen ist.

2. Vorrichtung nach Anspruch 1, dadurch gekennzeichnet, daß der Boden (38) der Zylinderbohrung (26) durch eine Schraubkappe (32) gebildet ist.

3. Vorrichtung nach Anspruch 2, dadurch gekennzeichnet, daß die Zündvorrichtung (40) an der Schraubkappe (32) angeordnet ist.

4. Vorrichtung nach Anspruch 1, dadurch gekennzeichnet, daß auf den dem Gehäuse (16) gegenüberliegenden Enden der Bolzen (14) eine Buchse (50) angeordnet ist, die über einen Scherstift (52) mit dem Bolzen verbunden ist und ein Außengewinde für eine gegen den angrenzenden Bauteil schraubbare Arretierungsmutter (54) trägt.

## Claims

1. A device, acting by means of pyrotechnic charge, for the release of joints between a plurality of constructional components subject to load, including at least two bolts (14) acted on by transverse forces, characterized in that the bolts (14) of the joint are connected to a housing (16) having a cylinder bore (26) therein, the axis of which lies substantially in the direction of the resultant of the force or forces necessary to release the joint by extracting said bolts, that a piston (28) is provided supported on one of the constructional components (2) and engaging in the cylinder bore of said housing, and that an ignition device (40) is provided for the pyrotechnic charge positioned between piston and cylinder base.

2. A device according to Claim 1, characterized in that the base (38) of the cylinder bore (26) is formed by a screwed cap (32).

3. A device according to Claim 2, characterized in that the ignition device (40) is arranged on said screwed cap (32).

4. A device according to Claim 1, characterized in that a collar (50) is arranged on the ends of the bolts (14) remonte from the housing (16), said collar being connected to the bolt by a shearing pin (52) and bearing an external thread for a locking nut (54) to be screwed against the adjacent constructional component.

## Revendications

1. Dispositif travaillant avec des charges pyrotechniques destiné à rompre des assemblages en charge entre plusieurs éléments, réalisés à l'aide d'au moins deux axes (14) sollicités par des forces transversales, caractérisé en ce que les axes (14) de l'assemblage sont reliés à un corps de dispositif (16) qui est pourvu d'un alésage cylindrique (26) dont l'axe coïncide pour l'essentiel avec la résultante de la force ou des forces nécessaires pour rompre l'assemblage en extrayant les axes, qu'il est prévu un piston (28) prenant appui sur l'un des éléments (2) de l'assemblage qui s'engage dans l'alésage cylindrique du corps, et qu'il est prévu un dispositif d'allumage pour la charge pyrotechnique disposée entre le piston et le fond du cylindre.

2. Dispositif selon la revendication 1, caractérisé en ce que le fond (38) de l'alésage cylindrique (26) est formé par un bouchon fileté (32).

3. Dispositif selon la revendication 2, caractérisé en ce que le dispositif d'allumage (40) est disposé sur le bouchon fileté (32).

4. Dispositif selon la revendication 1, caractérisé en ce que sur les extrémités des axes (14) situées à l'opposé du corps (16) est disposée une douille (50) qui est reliée à l'axe par un goujon de cisaillement (52) et porte un filetage extérieur pour un écrou de blocage (54) pouvant être vissé contre l'élément de l'assemblage contigu.

0 088 247

FIG.1

FIG.2